(19) Europäisches Patentamt
European Patent Office
Office européen des brevets

(11) **EP 4 197 980 A1**

(12) **EUROPEAN PATENT APPLICATION**

(43) Date of publication:
**21.06.2023 Bulletin 2023/25**

(21) Application number: **21214991.8**

(22) Date of filing: **16.12.2021**

(51) International Patent Classification (IPC):
**C03C 17/22** (2006.01)   **C03C 11/00** (2006.01)
**C03C 12/00** (2006.01)   **C08K 7/20** (2006.01)
**C08K 7/28** (2006.01)   **C08K 3/38** (2006.01)

(52) Cooperative Patent Classification (CPC):
**C03C 11/002; C03C 12/00; C03C 17/225;
C08K 7/20; C08K 7/28;** C03C 2217/42;
C08K 2003/385

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **3M Innovative Properties Company**
**Saint Paul, MN 55133-3427 (US)**

(72) Inventors:
• **Engler, Martin**
**87439 Kempten (DE)**
• **Wildhack, Stefanie**
**87437 Kempten (DE)**
• **Gwizd, Sebastian**
**87437 Kempten (DE)**
• **WU, Yong Kang**
**Woodbury, MN 55129 (US)**
• **Wolff, Friedrich**
**84489 Burghausen (DE)**

(74) Representative: **Mössner, Brigitte**
**3M Deutschland GmbH**
**Office of Intellectual Property Counsel**
**(PC 072P)**
**Carl-Schurz-Strasse 1**
**41453 Neuss (DE)**

(54) **COATED GLASS MICROSPHERES COMPRISING A COATING COMPRISING HEXAGONAL BORON NITRIDE PARTICLES**

(57) The present disclosure relates to a composition comprising coated glass microspheres, wherein each coated glass microsphere comprises a glass microsphere and a coating comprising hexagonal boron nitride particles on at least a portion of a surface of the glass microsphere. The present disclosure further relates to a process for making said composition.

EP 4 197 980 A1

**Description**

Technical Field

The present disclosure relates to a composition comprising coated glass microspheres, each of the coated glass microspheres comprising a glass microsphere and a coating comprising hexagonal boron nitride particles.

Background

Thermally conductive polymer compounds are used for thermal management solutions. For electronic devices, like in mobile devices, for LED technology, for electric vehicles, and for 5G technology, there is a growing demand for thermally conductive and electrically insulating polymer materials. To improve performance of these materials, thermal conductivity needs to be increased. To this end, thermally conductive fillers are used such as boron nitride, alumina, aluminum nitride, silicon carbide, silicon nitride, magnesium oxide or minerals. With increasing load of thermally conductive fillers, higher values for thermal conductivity can be obtained. The maximum loads of fillers in compounds are typically limiting thermal conductivities that can be achieved.

For 5G technology applications, materials are needed that have high thermal conductivity, electrical insulation, low weight and low permittivity, i.e., low dielectric constant and low dissipation factor.

To reduce weight of polymer compounds, hollow glass microspheres have been used, for example in EP 3 130 636 A1.

Yung et al. (Journal of Applied Polymer Science, Vol. 116, 518-527 (2010)) have used a combination of boron nitride and aluminum nitride with hollow glass microspheres as filler for polymers, to improve thermal conductivity and dielectric properties.

There is still a need for filled polymer materials having high thermal conductivity and electrical insulation, and low weight and low permittivity, and for filler materials that allow to make such filled polymer materials with low viscosity.

As used herein, "a", "an", "the", "at least one" and "one or more" are used interchangeably. The term "comprise" shall include also the terms "consist essentially of" and "consists of".

Summary

In a first aspect, the present disclosure relates to a composition comprising coated glass microspheres, wherein each coated glass microsphere comprises a glass microsphere and a coating comprising hexagonal boron nitride particles on at least a portion of a surface of the glass microsphere.

In another aspect, the present disclosure relates to a process for making a composition as disclosed herein, comprising

    providing glass microspheres;
    providing hexagonal boron nitride particles;
    mixing the glass microspheres and the hexagonal boron nitride particles to form a mixture of glass microspheres and hexagonal boron nitride particles; and
    heat treating of the mixture of glass microspheres and hexagonal boron nitride particles to form the composition comprising coated glass microspheres.

The composition comprising coated glass microspheres as disclosed herein can be used as filler for polymers. Polymer-filler composite materials comprising a composition comprising coated glass microspheres as disclosed herein dispersed in a matrix material have high thermal conductivity, electrical insulation, and low permittivity, i.e., low dielectric constant and low dissipation factor.

In some embodiments, with the composition comprising coated glass microspheres as disclosed herein comprising coated hollow glass microspheres, polymer-filler composite materials comprising the composition comprising coated glass microspheres dispersed in a polymer matrix material have high thermal conductivity, electrical insulation, low weight and low permittivity, i.e., low dielectric constant and low dissipation factor.

When using the composition comprising coated glass microspheres disclosed herein as filler for polymers, i.e., for polymer-filler composite materials, higher thermal conductivities can be obtained compared to using the same amount of hexagonal boron nitride particles and glass microspheres as individual fillers in combination in the polymer material. Further, when using the composition comprising coated glass microspheres disclosed herein as filler for polymers, i.e., for polymer-filler composite materials, lower viscosities of the polymer-filler composite material can be obtained compared to using a combination of hexagonal boron nitride particles and glass microspheres as individual fillers in the polymer material. The lower viscosities allow higher filler loadings and therefore higher thermal conductivities of the polymer-filler composite material.

Further, the composition comprising coated glass microspheres disclosed herein has the advantage that, with the hexagonal boron nitride particles being permanently attached to the glass microspheres, no unmixing or segregation of the hexagonal boron nitride particles and the glass microspheres can occur, whereas when using a combination of hexagonal boron nitride particles and glass microspheres as individual fillers in polymer materials, there is a risk of unmixing or segregation which can result in undesired anisotropic properties of the polymer-filler composite material.

Processing of polymer-filler composite materials when using the composition comprising coated glass microspheres as disclosed herein as a filler is easier, faster and more reliable, as only one filler needs to be added to the polymer, whereas two separate fillers would have to be handled and added when using hexagonal boron nitride particles and glass microspheres as individual fillers in combination in the polymer material.

In some embodiments, the dielectric properties of polymer-filler composite materials comprising the composition comprising coated glass microspheres as disclosed herein are improved compared to using hexagonal boron nitride particles and glass microspheres as individual fillers in combination in the polymer material.

Brief Description of the Drawings

The present disclosure is explained in more detail on the basis of the drawings, in which

Figure 1 shows a scanning electron micrograph of a coated glass microsphere of a composition comprising coated glass microspheres as disclosed herein;

Figure 2 shows a scanning electron micrograph of a fractured piece of a coated glass microsphere of a composition comprising coated glass microspheres as disclosed herein, with the glass microsphere that has been used for coating being a hollow glass microsphere;

Figure 3 schematically shows an equipment for thermomechanical treatment for making a composition comprising coated glass microspheres as disclosed herein;

Figure 4 schematically shows a cross-sectional view of a coated glass microsphere of a composition comprising coated glass microspheres as disclosed herein, with the glass microsphere that has been used for coating being a hollow glass microsphere; and

Figure 5 schematically shows the thermomechanical treatment for making of a composition comprising coated glass microspheres as disclosed herein.

Detailed Description

As used herein, "glass microspheres" means glass particles having a rounded shape, e.g., an egg-shape, a pearl shape, a bead shape, an ellipsoidal shape, a spheroidal shape, or a spherical shape. Preferably, the glass microspheres have a spherical shape. The glass microspheres as used herein, and the coated glass microspheres of the composition disclosed herein have a maximum dimension of 1 mm.

The aspect ratio of the coated glass microspheres comprised in the composition disclosed herein, and of the glass microspheres used herein, may be 1 or larger than 1. The aspect ratio of the coated glass microspheres comprised in the composition disclosed herein, and of the glass microspheres used herein, may be from 1 to at most 50, or from 1 to at most 20. The aspect ratio of the coated glass microspheres comprised in the composition disclosed herein, and of the glass microspheres used herein, preferably is from 1 to 10, more preferably from 1 to 5, more preferably from 1 to 2, even more preferably 1. The aspect ratio of the coated glass microspheres comprised in the composition disclosed herein is the ratio of the longest dimension of the coated glass microspheres to the minimum dimension in a direction perpendicular to the direction of the longest dimension of the coated glass microspheres.

The aspect ratio of the glass microspheres used herein is the ratio of the longest dimension of the glass microspheres used herein to the minimum dimension in a direction perpendicular to the direction of the longest dimension of the glass microspheres used herein.

The surface of the glass microspheres as used herein for coating with hexagonal boron nitride particles may be smooth and have an ideal spherical shape, but it is also possible that the surface of the glass microspheres is rough or somewhat wavy or rippled. The surface of the coated glass microspheres comprised in the composition disclosed herein may have an ideal spherical shape, but typically the surface of the coated glass microspheres disclosed herein is structured due to the coating comprising hexagonal boron nitride particles.

The number of coated glass microspheres comprised in the composition disclosed herein is at least two, or at least 10, or at least 100, or at least 1000, or at least 10000, or at least 100000. Typically, at least 1 million coated glass microspheres are comprised in the composition disclosed herein.

Each of the coated glass microspheres comprised in the composition disclosed herein comprises a glass microsphere and a coating on at least a portion of the surface of the glass microsphere. For example, each coated glass microsphere may comprise a coating on 10%, or on 20%, or on 50%, or on 70%, or on 80%, or on 90%, or on 100%, of a surface of the glass microsphere, i.e., on 10%, or on 20%, or on 50%, or on 70%, or on 80%, or on 90%, or on 100%, of the surface area of the glass microsphere. Typically, each coated glass microsphere comprises a coating on at least 50 %, or on at least 70%, or on at least 80%, or on at least 90% of the surface area of the glass microsphere. Preferably, each coated glass microspheres comprises a coating on the whole surface of the glass microsphere, i.e., the whole surface area of the glass microsphere is coated.

The coating on the glass microspheres of the composition comprising coated glass microspheres as disclosed herein comprises hexagonal boron nitride particles.

The composition disclosed herein may further comprise glass microspheres which do not comprise a coating comprising hexagonal boron nitride particles on at least a portion of a surface of the glass microsphere. Typically, at least 50 %, or at least 70%, or at least 80%, or at least 90%, or even 100% of the glass microspheres in the compositions disclosed herein are coated glass microspheres.

In some embodiments, the coating comprises further inorganic particles, other than hexagonal boron nitride particles, such as alumina particles, aluminum nitride particles, silicon carbide particles, or silicon nitride particles. The amount of further inorganic particles typically is below 50 percent by weight, based on the total weight of the coating. Preferably, the amount of further inorganic particles is below 10 percent by weight, based on the total weight of the coating. More preferably, the amount of further inorganic particles is below 1 percent by weight, based on the total weight of the coating.

Typically, the coating comprises at least 50 percent by weight of hexagonal boron nitride particles, based on the total weight of the coating. Preferably, the coating comprises at least 90 percent by weight of hexagonal boron nitride particles, based on the total weight of the coating. More preferably, the coating comprises at least 99 percent by weight of hexagonal boron nitride particles, based on the total weight of the coating.

In some embodiments, the coating consists of hexagonal boron nitride particles, i.e., the coating does not comprise further inorganic particles other than hexagonal boron nitride particles.

The coated glass microspheres of the composition disclosed herein may also be referred to as "composite particles", wherein each composite particle comprises a glass microsphere and a coating comprising hexagonal boron nitride particles on at least a portion of a surface of the glass microsphere.

In some embodiments, the composition comprising coated glass microspheres as disclosed herein comprises coated hollow glass microspheres. In some preferred embodiments, the composition comprising coated glass microspheres consists of coated hollow glass microspheres, i.e., each individual coated glass microsphere is a coated hollow glass microsphere.

Hollow glass microspheres may also be referred to as glass microbubbles, glass bubbles, or glass microballoons.

In some embodiments, the composition comprising coated glass microspheres as disclosed herein comprises coated solid glass microspheres. "Solid glass microspheres" means that the glass microspheres are non-hollow. It is also possible that the composition comprising coated glass microspheres consists of coated solid glass microspheres, i.e., each coated glass microsphere is a coated solid glass microsphere. The solid glass microspheres may also be referred to as "glass microbeads", or as "glass pearls", or as "glass micropearls".

In some embodiments, the composition comprising coated glass microspheres comprises a mixture of coated hollow glass microspheres and coated solid glass microspheres.

The coated glass microspheres comprised in the composition disclosed herein may have an isostatic collapse strength of at least 20 MPa, or of at least 50 MPa, or of at least 100 MPa. The isostatic collapse strength may be measured on a dispersion of the coated glass microspheres in glycerol using ASTM D 3102-78.

The coated glass microspheres comprised in the composition as disclosed herein may have a mean particle size ($d_{50}$) of from 1 to 100 $\mu$m. Preferably, the mean particle size ($d_{50}$) of the coated glass microspheres is from 5 to 100 $\mu$m, or from 10 to 50 $\mu$m, or from 10 to 30 $\mu$m. The mean particle size ($d_{50}$) can be measured by laser diffraction (wet measurement).

The real density of the coated glass microspheres comprised in the composition as disclosed herein may be from 0.2 to 0.8 g/cm$^3$, if hollow glass microspheres are used. The real density of the coated glass microspheres comprised in the composition as disclosed herein may be from 2.2 to 2.8 g/cm$^3$, if solid glass microspheres are used. The real density of the coated glass microspheres may also be referred to as the average true density. The real density (or average true density) of the coated glass microspheres can be measured using a pycnometer according to DIN EN ISO 1183-3.

The coated glass microspheres of the composition as disclosed herein may comprise at least 5 percent by weight of hexagonal boron nitride particles, based on the total weight of the coated glass microspheres. Preferably, the coated glass microspheres comprise at least 10 percent by weight of hexagonal boron nitride particles, based on the total weight of the coated glass microspheres.

Typically, the coated glass microspheres comprised in the composition as disclosed herein comprise at most 50 percent by weight of hexagonal boron nitride particles, based on the total weight of the coated glass microspheres.

Preferably, the coated glass microspheres comprised in the composition as disclosed herein comprise from 5 to 50 percent by weight of hexagonal boron nitride particles, based on the total weight of the coated glass microspheres. More preferably, the coated glass microspheres comprised in the composition as disclosed herein comprise from 10 to 50 percent by weight of hexagonal boron nitride particles, based on the total weight of the coated glass microspheres. If the coated glass microspheres comprise or consist of coated hollow glass microspheres, the coated glass microspheres may comprise from 20 to 45 percent by weight of hexagonal boron nitride particles, based on the total weight of the coated glass microspheres. If the coated glass microspheres comprise or consist of coated solid glass microspheres, the coated glass microspheres may comprise from 10 to 40 percent by weight of hexagonal boron nitride particles, based on the total weight of the coated glass microspheres.

The hexagonal boron nitride particles comprise platelet-shaped hexagonal boron nitride particles. Platelet-shaped hexagonal boron nitride particles may also be referred to as flake-shaped or scale-like hexagonal boron nitride particles. In some embodiments, at least 50%, or at least 90%, of the hexagonal boron nitride particles are platelet-shaped hexagonal boron nitride particles. In some embodiments, all hexagonal boron nitride particles are platelet-shaped.

The mean aspect ratio of the platelet-shaped hexagonal boron nitride particles used for the coated glass microspheres comprised in the composition disclosed herein typically is at least 5. The aspect ratio is the ratio of the diameter to the thickness of the platelet-shaped hexagonal boron nitride particles. As used herein, the platelet-shaped hexagonal boron nitride particles are also referred to as boron nitride platelets. The aspect ratio of the boron nitride platelets may be at least 10, or at least 15, or at least 20. The mean aspect ratio of the boron nitride platelets may also be up to 40, or up to 100. The mean aspect ratio of the boron nitride platelets may be from 7 to 20, or from 20 to 40, or from 7 to 40, or from 10 to 40, or from 50 to 100. Typically, the mean aspect ratio of the boron nitride platelets is at most 500. The mean aspect ratio can be measured by scanning electron microscopy (SEM), by determining the aspect ratio of 20 particles, and calculating the mean value of the 20 individual values determined for the aspect ratio. The aspect ratio of an individual boron nitride platelet is determined by measuring the diameter and the thickness of the boron nitride platelet and calculating the ratio of the diameter to the thickness. Required magnification of the SEM images used to measure diameter and thickness of boron nitride platelets depends on the size of the platelets. Magnification should be at least 1000x, preferably at least 2000x. Where appropriate, i.e., for smaller platelets with a mean particle size ($d_{50}$) of 5 to 10 $\mu$m, a magnification of 5000x should be used.

The mean particle size ($d_{50}$) of the hexagonal boron nitride particles used for the coated glass microspheres comprised in the composition disclosed herein may be from 0.5 to 100 $\mu$m. Preferably, the mean particle size ($d_{50}$) of the hexagonal boron nitride particles is from 0.5 to 10 $\mu$m. The mean particle size ($d_{50}$) of the hexagonal boron nitride particles may also be from 0.5 to 5 $\mu$m, or from 0.5 to 3 $\mu$m. The mean particle size ($d_{50}$) of the hexagonal boron nitride particles used for the coated glass microspheres comprised in the composition disclosed herein can be measured by laser diffraction (wet measurement).

The particle size of the hexagonal boron nitride particles of the coating of the coated glass microspheres comprised in the composition disclosed herein can be measured by scanning electron microscopy (SEM), by determining the largest diameter of 20 particles, and calculating the mean value of the 20 individual values determined for the largest diameter. Required magnification of the SEM images used to measure the largest diameter of boron nitride particles depends on the size of the particles. Magnification should be at least 1000x, preferably at least 2000x. Where appropriate, i.e., for smaller particles with a particle size of up to 10 $\mu$m, a magnification of 5000x should be used, and for smaller particles with a particle size of up to 3 $\mu$m, a magnification of 15000x may be used.

Each glass microsphere comprised in each coated glass microsphere of the composition disclosed herein has a surface. The hexagonal boron nitride particles of the coating of each coated glass microsphere comprise hexagonal boron nitride particles that are directly adhering to the surface of the glass microsphere comprised in each coated glass microsphere. By adhering to the surface of an individual glass microsphere, the hexagonal boron nitride particles form a coating on the individual glass microsphere. The other hexagonal boron nitride particles, i.e., the hexagonal boron nitride particles that are not directly adhering to the surface of the individual glass microsphere, adhere to other hexagonal boron nitride particles of the coating. The adherence of individual hexagonal boron nitride particles to other hexagonal boron nitride particles may be facilitated by small amounts of boron oxide which may have the function of an inorganic binder. By adhering to the surface of the individual glass microspheres or to other hexagonal boron nitride particles, the hexagonal boron nitride particles form a coating on the individual glass microspheres.

By "adhere to the surface" it is meant that the hexagonal boron nitride particles are permanently fixed on the surface of the individual glass microspheres, i.e., the hexagonal boron nitride particles and the individual glass microspheres cling together and are hard to separate. The coated glass microspheres comprised in the composition disclosed herein can be crushed, for example by uniaxially pressing with a load of 10 kN, and on the so obtained individual fractured pieces of the coated glass microspheres the hexagonal boron nitride particles still remain adhered to the surface of the glass microspheres. When the composition comprising coated glass microspheres as disclosed herein is used as filler for polymers and compounded with a polymer matrix material, the hexagonal boron nitride particles also still remain adhered to the surface of the glass microspheres.

The thickness of the coating of the coated glass microspheres comprised in the composition as disclosed herein typically is at most 1000 nm.

The thickness of the coating of the coated glass microspheres comprised in the composition as disclosed herein typically is at least 10 nm and may be at least 50 nm. The thickness of the coating of the coated glass microspheres comprised in the composition disclosed herein may be from 10 to 1000 nm, or from 50 to 1000 nm, or from 100 to 1000 nm, or from 200 to 1000 nm, or from 400 to 800 nm.

The thickness of the coating of the coated glass microspheres comprised in the composition as disclosed herein may be measured by crushing or fracturing of the plurality of coated glass microspheres by uniaxially pressing with a load of 10 kN and measurement of the thickness of the coating on the obtained fractured pieces of the coated glass microspheres by scanning electron microscopy (SEM).

The hexagonal boron nitride particles of the coating may be placed in layers one upon another, or may be placed in an irregular manner on the surface of the glass microspheres. Individual hexagonal boron nitride particles may be oriented parallelly to the surface of the glass microspheres, or may be oriented in any direction not parallel to the surface of the glass microspheres. Individual hexagonal boron nitride particles may also be oriented perpendicularly to the surface of the glass microspheres, i.e., in a radial manner. Typically, most of the hexagonal boron nitride particles, i.e., more than 50% of the hexagonal boron nitride particles, are oriented parallelly to the surface of the microsphere.

The coating of the coated glass microspheres comprised in the composition as disclosed herein may comprise from 1 to 10 layers of hexagonal boron nitride particles. The number of layers is to be understood as a mean calculated value and can be calculated on the basis of the measured thickness of the coating and the mean thickness of the hexagonal boron nitride platelets. The mean thickness of the hexagonal boron nitride platelets can be measured by scanning electron microscopy (SEM).

The coating may comprise boron oxide ($B_2O_3$) or borates such as alkaline borates or alkaline earth borates. Examples of alkaline borates and alkaline earth borates are sodium borate and calcium borates. The boron oxide or borates may originate from impurities or additives in the hexagonal boron nitride particles, or may originate from the glass material of the glass microspheres, or from both. Boron oxide may also be formed by oxidation of the hexagonal boron nitride particles during the coating of the glass microspheres by heat treating.

The amount of boron oxide comprised in the coating may be up to 1, up to 2, up to 3, up to 4, up to 5, or up to 10 percent by weight, based on the total weight of the coating. Typically, the amount of boron oxide in the coating is at most 0.5 percent by weight, or at most 0.1 percent by weight, or at most 0.05 percent by weight, or at most 0.01 percent by weight, or at most 0.005 percent by weight, based on the total weight of the coating. Preferably, the amount of boron oxide in the coating is at most 0.01 percent by weight, more preferably at most 0.005 percent by weight, based on the total weight of the coating.

The amount of borates comprised in the coating may be up to 1, up to 2, up to 3, up to 4, up to 5, or up to 10 percent by weight, based on the total weight of the coating. Typically, the amount of borates in the coating is at most 0.5 percent by weight, or at most 0.1 percent by weight, or at most 0.05 percent by weight, or at most 0.01 percent by weight, or at most 0.005 percent by weight, based on the total weight of the coating. Preferably, the amount of borates in the coating is at most 0.01 percent by weight, more preferably at most 0.005 percent by weight, based on the total weight of the coating.

The boron oxide and the borates comprised in the coating may have the function of an inorganic binder, i.e., they may help to adhere the hexagonal boron nitride particles to the surface of the glass microspheres and to each other.

The coating of the coated glass microspheres comprised in the composition as disclosed herein typically does not comprise a binder. As used herein, "binder" means an organic or inorganic compound that has the function of adhering the hexagonal boron nitride particles to one another and/or to the surface of the glass microspheres, and that has been added to the glass microspheres and the hexagonal nitride particles in the process for making the composition comprising coated glass microspheres. In other words, by "the coating of the coated glass microspheres does not comprise a binder" it is meant that the coating does not comprise a further binder in addition to boron oxide or borates which may be comprised in the coating, typically in small amounts as described above. The coating typically consists of hexagonal boron nitride particles, and optional boron oxide and optional borates. If boron oxide and borates are present, the amount of boron oxide and borates is as described above.

The specific surface area (BET) of the plurality of coated glass microspheres as disclosed herein may be from 2 to 30 m²/g.

In some embodiments, the composition comprising coated glass microspheres as disclosed herein comprises coated hollow glass microspheres, and each of the coated glass microspheres comprises a coating on the whole surface area of the individual glass microsphere, and the hexagonal boron nitride particles of the coating comprise platelet-shaped hexagonal boron nitride particles, and the mean particle size ($d_{50}$) of the coated glass microspheres is from 10 to 50 $\mu$m, and the thickness of the coating of the coated glass microspheres is at most 1000 nm, and the coating comprises at least 99 percent by weight of hexagonal boron nitride particles, based on the total weight of the coating, and the coated glass microspheres comprise from 10 to 50 percent by weight of hexagonal boron nitride particles, based on the total weight of the coated glass microspheres.

The glass material of the glass microspheres which may be used for the coated glass microspheres comprised in the composition as disclosed herein may be a soda lime glass or a borosilicate glass. The glass microspheres for use herein can be made by techniques known in the art.

Although the frit and/or the feed of the glass microspheres for use herein, i.e., of the hollow glass microspheres and of the solid glass microspheres for use herein, may have any composition that is capable of forming a glass, typically, on a total weight basis, the frit comprises from 50 to 90 percent of $SiO_2$, from 2 to 20 percent of alkali metal oxide, from 1 to 30 percent of $B_2O_3$, from 0 to 25 percent divalent metal oxides (for example, CaO, MgO, BaO, SrO, ZnO, or PbO), from 0 to 10 percent of tetravalent metal oxides other than $SiO_2$ (for example, $TiO_2$, $MnO_2$, or $ZrO_2$), from 0 to 20 percent of trivalent metal oxides (for example, $Al_2O_3$, $Fe_2O_3$, or $Sb_2O_3$), from 0 to 10 percent of oxides of pentavalent atoms (for example, $P_2O_5$ or $V_2O_5$), and from 0 to 5 percent fluorine (as fluoride) which may act as a fluxing agent to facilitate melting of the glass composition. Additional ingredients are useful in frit compositions and can be included in the frit, for example, to contribute particular properties or characteristics (for example, hardness or color) to the resultant glass bubbles.

The hollow glass microspheres which may be used for the coated glass microspheres comprised in the composition as disclosed herein can be made by techniques known in the art (see, e.g., U. S. Pat. Nos. 2,978,340 (Veatch et al.); 3,030,215 (Veatch et al.); 3,129,086 (Veatch et al.); and 3,230,064 (Veatch et al.); 3,365,315 (Beck et al.); 4,391,646 (Howell); and 4,767,726 (Marshall); and U. S. Pat. App. Pub. No. 2006/0122049 (Marshall et. al). Techniques for preparing hollow glass microspheres typically include heating milled frit, commonly referred to as "feed", which contains a blowing agent (e.g., sulfur or a compound of oxygen and sulfur). The amount of sulfur may be from 0.005-0.5 percent (for example, as elemental sulfur, sulfate or sulfite), based on the total weight of the glass frit. Frit can be made by heating mineral components of glass at high temperatures until molten glass is formed.

In some embodiments, the hollow glass microspheres used for the coated glass microspheres comprised in the composition disclosed herein have a glass composition comprising more alkaline earth metal oxide than alkali metal oxide. In some of these embodiments, the weight ratio of alkaline earth metal oxide to alkali metal oxide is in a range from 1.2:1 to 3:1. In some embodiments, the hollow glass microspheres have a glass composition comprising $B_2O_3$ in a range from 2 percent to 6 percent based on the total weight of the glass bubbles. In some embodiments, the hollow glass microspheres have a glass composition comprising up to 5 percent by weight $Al_2O_3$, based on the total weight of the hollow glass microspheres. In some embodiments, the glass composition is essentially free of $Al_2O_3$. "Essentially free of $Al_2O_3$" may mean up to 5, 4, 3, 2, 1, 0.75, 0.5, 0.25, or 0.1 percent by weight $Al_2O_3$. Glass compositions that are "essentially free of $Al_2O_3$" also include glass compositions having no $Al_2O_3$. Hollow glass microspheres useful for the coated glass microspheres comprised in the composition disclosed herein may have, in some embodiments, a chemical composition wherein at least 90%, 94%, or even at least 97% of the glass comprises at least 67% $SiO_2$, (e.g., a range of 70% to 80% $SiO_2$), a range of 8% to 15% of an alkaline earth metal oxide (e.g., CaO), a range of 3% to 8% of an alkali metal oxide (e.g., $Na_2O$), a range of 2% to 6% $B_2O_3$, and a range of 0.125% to 1.5% $SO_3$. In some embodiments, the glass comprises in a range from 30% to 40% Si, 3% to 8% Na, 5% to 11% Ca, 0.5% to 2% B, and 40% to 55% O, based on the total of the glass composition.

The "average true density" of the glass microspheres used for the coated glass microspheres comprised in the composition disclosed herein, and for the coated glass microspheres comprised in the composition as disclosed herein, is the quotient obtained by dividing the mass of a sample of glass microspheres by the true volume of that mass of glass microspheres as measured by a gas pycnometer. The "true volume" is the aggregate total volume of the glass microspheres, not the bulk volume. The "average true density" may also be referred to as the "real density" of glass microspheres.

The average true density of the hollow glass microspheres useful for the coated glass microspheres comprised in the composition disclosed herein is generally at least about 0.2 grams per cubic centimeter ($g/cm^3$), 0.25 $g/cm^3$, or 0.3 $g/cm^3$. In some embodiments, the hollow glass microspheres useful for the coated glass microspheres comprised in the composition as disclosed herein have an average true density of up to about 0.65 $g/cm^3$. "About 0.65 $g/cm^3$" means 0.65 $g/cm^3$ $\pm$ five percent. In some of these embodiments, the average true density of the hollow glass microspheres is up to 0.6 $g/cm^3$ or 0.55 $g/cm^3$. For example, the average true density of the hollow glass microspheres may be in a range from 0.2 $g/cm^3$ to 0.65 $g/cm^3$, 0.25 $g/cm^3$ to 0.6 $g/cm^3$, 0.3 $g/cm^3$ to 0.60 $g/cm^3$, or 0.3 $g/cm^3$ to 0.55 $g/cm^3$. Hollow glass microspheres having any of these densities can be useful for lowering the density of a composite material comprising a polymer and coated glass microspheres, relative to polymers that do not contain hollow glass microspheres.

The real density of the solid glass microspheres used herein for making the coated solid glass microspheres comprised in the composition disclosed herein may be from 2.2 to 2.8 $g/cm^3$.

The average true density of the glass microspheres used for the coated glass microspheres comprised in the composition disclosed herein, and for the coated glass microspheres comprised in the composition as disclosed herein, can be measured using a pycnometer according to DIN EN ISO 1183-3. The pycnometer may be obtained, for example, under the trade designation "ACCUPYC II 1340 PYCNOMETER" from Micromeritics, Norcross, Georgia, or under the trade designations "PENTAPYCNOMETER" or "ULTRAPYCNOMETER 1000" from Formanex, Inc., San Diego, CA. Average true density can typically be measured with an accuracy of 0.001 g/cm$^3$. Accordingly, each of the density values provided above can be $\pm$ five percent.

A variety of sizes of glass microspheres (i.e., hollow and solid glass microspheres, respectively) may be useful for making the coated glass microspheres comprised in the composition as disclosed herein. As used herein, the term size is considered to be equivalent with the diameter and height of the glass microspheres. In some embodiments, the glass microspheres can have a median size by volume in a range from 1 to 100 micrometers, or from 10 to 60 micrometers (in some embodiments from 15 to 40 micrometers, 10 to 25 micrometers, 20 to 45 micrometers, 20 to 40 micrometers, 10 to 50 micrometers, 10 to 30 micrometers, or 5 to 100 $\mu$m). The median size is also called the $d_{50}$ size, where 50 percent by volume of the glass microspheres in the distribution are smaller than the indicated size. The median size by volume is determined by laser light diffraction by dispersing the glass microspheres in deaerated, deionized water. Laser light diffraction particle size analyzers are available, for example, under the trade designation "MASTERSIZER 2000" from Malvern Instruments, Malvern, UK.

The coated glass microspheres comprised in the composition as disclosed herein, and the glass microspheres useful for the coated glass microspheres comprised in the composition as disclosed herein, typically need to be strong enough to survive the processing, in particular an extrusion process or an injection molding process. A useful hydrostatic pressure at which ten percent by volume of the hollow glass microspheres collapses is at least about 20 (in some embodiments, at least about 38, 50, or 55) megapascals (MPa). "About 20 MPa" means 20 MPa $\pm$ five percent. In some embodiments, a hydrostatic pressure at which ten percent by volume of the hollow glass microspheres collapses can be at least 100, 110, or 120 MPa. In some embodiments, a hydrostatic pressure at which ten percent by volume of the hollow glass microspheres collapses can be at least 170, 180 or 190 MPa.

Hollow glass microspheres that may be used for the coated glass microspheres comprised in the composition disclosed herein can be obtained commercially and include those marketed by 3M Company, St. Paul, MN, under the trade designation "3M GLASS BUBBLES" (e.g., grades S60, S60HS, iM30K, iM16K, S38HS, S38XHS, K42HS, K46, and H50/10000). Other suitable hollow glass microspheres can be obtained, for example, from Potters Industries, Valley Forge, PA, (an affiliate of PQ Corporation) under the trade designations "SPHERICEL HOLLOW GLASS SPHERES" (e.g., grades 110P8 and 60P18) and "Q-CEL HOLLOW SPHERES" (e.g., grades 30, 6014, 6019, 6028, 6036, 6042, 6048, 5019, 5023, and 5028), from Silbrico Corp., Hodgkins, IL under the trade designation "SIL-CELL" (e.g., grades SIL 35/34, SIL-32, SIL-42, and SIL-43), and from Sinosteel Maanshan Inst. of Mining Research Co., Maanshan, China, under the trade designation "Y8000".

The composition disclosed herein may further comprise a matrix material, wherein the coated glass microspheres are dispersed in the matrix material. The composition comprising coated glass microspheres dispersed in a matrix material may also be referred to as "composite material".

The matrix material may be a polymer material. The polymer material may be a thermoplastic material, a duroplastic or thermoset material, or an elastomeric material. Examples of suitable thermoplastic polymers include polyolefins (e.g., polyethylene including HDPE, LDPE, and LLDPE, polypropylene and polybutylene), polystyrene and high-impact polystyrene, polyamides, polyesters (e.g., polyethylene terephthalate and polycaprolactone), polyether ether ketones, polyetherimides, plasticized polyvinyl chlorides, cellulosic thermoplastics (e.g., cellulose acetate), polyethers, thermoplastic polyurethane, and polycarbonate. Examples of duroplastic or thermoset materials are polyester, vinylester, polyether, thermoset polyurethane (phenolic, vinylic), epoxy, polyvinyl chloride, and polymethylmethacrylate. Suitable duroplastic or thermoset polymers can comprise polyfunctional polymerizable monomers and/or oligomers (e.g., epoxy resins, urethane resins, acrylate monomers and/or oligomers, alkyd resins, and phenolic resins). The duroplastic or thermoset materials can optionally be used in combination with a suitable one or more curative compounds, for example, as will be known to those skilled in the art. Examples for elastomeric materials are silicone rubbers. Thermoplastic polyolefine elastomers may also be used. Thermoplastic polyolefine elastomers include rubbers like ethylene propylene rubber (EPR), ethylene propylene diene (EPDM), ethyleneoxide (EO), styrene ethylene butylene styrene (SEBS), liquid silicone elastomer, hydrocarbon-, nitril-, silicone-, fluorinated, and chlorinated rubbers.

In some embodiments, with hollow glass microspheres being used for the coated glass microspheres, the thermal conductivity (bulk thermal conductivity) of the composite material, i.e., of a composition comprising a polymer matrix material and coated glass microspheres dispersed in the matrix material, may be higher than the thermal conductivity of the polymer, whereas the thermal conductivity of a polymer material filled with uncoated hollow glass microspheres, i.e., hollow glass microspheres not coated with hexagonal boron nitride particles, typically is lower than the thermal conductivity of the polymer. The thermal conductivity may be from 10 to 50%, or from 10 to 100%, or from 10 to 200% higher than the thermal conductivity of the polymer.

The dielectric properties of the composite material, i.e., of a composition comprising a polymer matrix material and coated glass microspheres dispersed in the matrix material, may be improved compared to the dielectric properties of the unfilled polymer, i.e., dielectric constant and dielectric loss factor, of the composite material may be lower than for the unfilled polymer.

The composite material, i.e., the composition disclosed herein comprising a matrix material wherein the coated glass microspheres are dispersed in the matrix material, may comprise up to 80 percent, or up to 65 percent by volume of the coated glass microspheres, based on the total volume of the composite material, i.e., of the composition. The composite material may comprise from 10 to 80, or from 10 to 70, or from 10 to 65, or from 20 to 50 percent by volume of the coated glass microspheres, based on the total volume of the composite material. In some embodiments, the composite material comprises from 1 to 80, or from 1 to 70, or from 1 to 65 percent by volume of the coated glass microspheres, based on the total volume of the composite material.

The composite material may further comprise fillers for improvement of the mechanical properties, such as glass fibers or carbon fibers, and further thermally conductive fillers, such as alumina or graphite.

Further disclosed herein is a process for making a composition comprising coated glass microspheres according to the present disclosure, comprising

providing glass microspheres;
providing hexagonal boron nitride particles;
mixing the glass microspheres and the hexagonal boron nitride particles to form a mixture of glass microspheres and hexagonal boron nitride particles; and
heat treating of the mixture of glass microspheres and hexagonal boron nitride particles to form the composition comprising coated glass microspheres.

The glass microspheres which are provided for mixing with the hexagonal boron nitride particles do not comprise a coating comprising hexagonal boron nitride particles.

For producing the composition comprising coated glass microspheres as disclosed herein, hexagonal boron nitride particles and glass microspheres as described above more in detail may be used.

The hexagonal boron nitride particles used for producing the composition comprising coated glass microspheres as disclosed herein may have a specific surface area (BET) of at most 35 $m^2/g$, or of at most 20 $m^2/g$. Typically, the specific surface area of the hexagonal boron nitride particles is from 1 to 35 $m^2/g$.

The hexagonal boron nitride particles used for producing the composition comprising coated glass microspheres as disclosed herein may have a content of boron oxide of up to 1, up to 2, up to 3, up to 4, up to 5, or up to 10 percent by weight, based on the total weight of the hexagonal boron nitride particles. Typically, the content of boron oxide in the hexagonal boron nitride particles is at most 0.5 percent by weight, or at most 0.1 percent by weight, or at most 0.05 percent by weight, or at most 0.01 percent by weight, or at most 0.005 percent by weight, based on the total weight of the hexagonal boron nitride particles. Preferably, the content of boron oxide in the hexagonal boron nitride particles is at most 0.01 percent by weight, more preferably at most 0.005 percent by weight, based on the total weight of the hexagonal boron nitride particles.

In some embodiments, the mixture of glass microspheres and hexagonal boron nitride particles used in the process for making a composition comprising coated glass microspheres according to the present disclosure does not comprise a binder which has been added to the mixture, i.e., the mixture of glass microspheres and hexagonal boron nitride particles used in the process for making a composition comprising coated glass microspheres according to the present disclosure consists of glass microspheres and hexagonal boron nitride particles.

The mixing of the glass microspheres and the hexagonal boron nitride particles may be carried out before the heat treating of the mixture of glass microspheres and hexagonal boron nitride particles. The mixing of the glass microspheres and the hexagonal boron nitride particles may also be carried out simultaneously to the heat treating of the mixture of glass microspheres and hexagonal boron nitride particles. The mixing of the glass microspheres and the hexagonal boron nitride particles may also be carried out before and simultaneously to the heat treating of the mixture of glass microspheres and hexagonal boron nitride particles.

The mixing of the glass microspheres and the hexagonal boron nitride particles may be done by methods known in the art, such as blending or stirring.

The heat treating of the mixture of glass microspheres and hexagonal boron nitride particles may comprise, and preferably comprises, thermo-mechanically processing of the mixture of glass microspheres and hexagonal boron nitride particles.

The thermo-mechanically processing may be carried out by any kind of thermomechanical process, such as rolling or stirring. Rolling may be carried out in a rotary tube furnace, for example, and preferably in air. Stirring may be carried out with a stirring equipment placed in a furnace, preferably in air.

By mixing, the glass microspheres and the hexagonal boron nitride particles are brought into close contact with one another. By the thermo-mechanically processing, the glass microspheres are moved or rolled against the hexagonal boron nitride particles at elevated temperatures, where the glass microspheres already start to soften, thereby enabling that the hexagonal boron nitride particles adhere to the glass microspheres.

The mixture of glass microspheres and hexagonal boron nitride particles which is used for producing the composition comprising coated glass microspheres as disclosed herein may comprise up to 50 percent by weight of hexagonal boron nitride particles, based on the total weight of the mixture of glass microspheres and hexagonal boron nitride particles.

Preferably, the mixture of glass microspheres and hexagonal boron nitride particles comprises from 5 to 50, more preferably from 10 to 50 percent by weight of hexagonal boron nitride particles, based on the total weight of the mixture of glass microspheres and hexagonal boron nitride particles.

The heat treating of the mixture of glass microspheres and hexagonal boron nitride particles may be carried out at a temperature of from 600 to 850 °C, preferably from 700 to 800 °C, more preferably from 700 to 750 °C.

The heat treating of the mixture of glass microspheres and hexagonal boron nitride particles may be carried out for at least 15 minutes, preferably for at least 30 minutes.

The heat treating of the mixture of glass microspheres and hexagonal boron nitride particles may be carried out for at most 1 hour, or for at most 2 hours, or for at most 3 hours.

Typically, the heat treating of the mixture of glass microspheres and hexagonal boron nitride particles is carried out for at least 15 minutes and at most 3 hours, preferably for at least 30 minutes and at most 2 hours, at a temperature of from 600 to 850 °C, preferably from 700 to 800 °C, more preferably from 700 to 750 °C.

Advantageously, the composition comprising coated glass microspheres according to the present disclosure and/or made according to the method described above can be made without significant breakage of the glass microspheres, particularly of the hollow glass microspheres. This is evidenced visually, for example, by inspection of the coated glass microspheres under a microscope. It is also evidenced by a low difference between the average true density of the coated glass microspheres and the average true density of the glass microspheres from which they are made. It is further evidenced by the high isostatic collapse strength of the coated glass microspheres of at least 20 MPa.

Various embodiments and details of the composition comprising coated glass microspheres as disclosed herein and of the process for making the same are shown in the drawings.

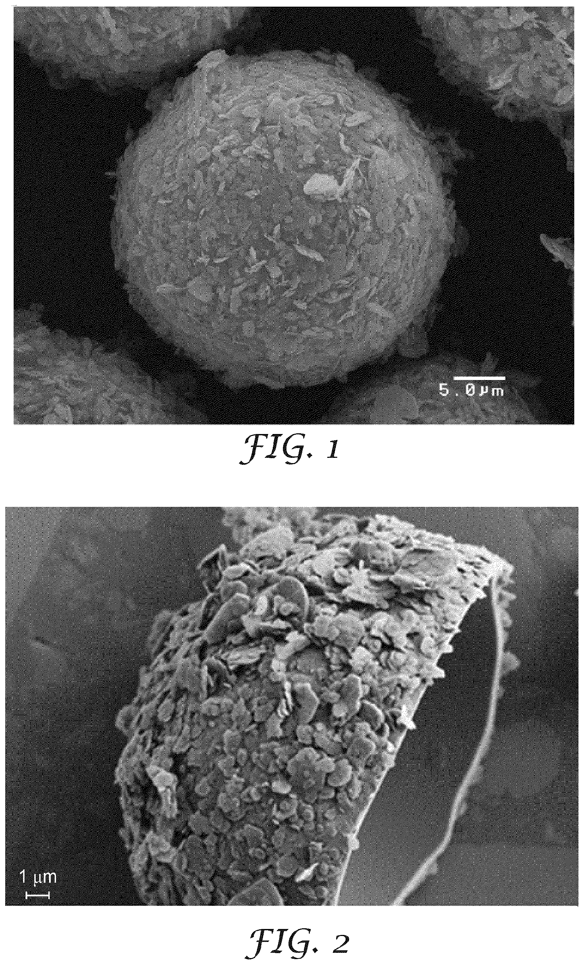

Figure 1 shows a scanning electron micrograph of a coated glass microsphere of a composition as disclosed herein. The coated glass microsphere shown in Figure 1 has a diameter of 30 μm. On the complete surface of the spherical-shaped microsphere, platelet-shaped hexagonal boron nitride particles are distributed homogeneously. The hexagonal boron nitride particles are adhering to the surface of the microsphere. Most of the hexagonal boron nitride particles, i.e., more than 50% of the hexagonal boron nitride particles, are oriented parallelly to the surface of the microsphere.

Figure 2 shows a scanning electron micrograph of a fractured piece of a coated glass microsphere of a composition as disclosed herein. For generating the fractured piece, a coated glass microsphere of a composition as disclosed herein has been crushed by pressing at 10 kN between two polished silicon carbide (SSiC, sintered silicon carbide) plates. The glass microsphere that has been used for coating with hexagonal boron nitride particles is a hollow glass microsphere, as can be seen in Figure 2. After crushing of the coated glass microsphere, the hexagonal boron nitride particles still have remained on the surface of the hollow glass microsphere, which shows that there is a good adherence of the hexagonal boron nitride particles to the hollow glass microsphere.

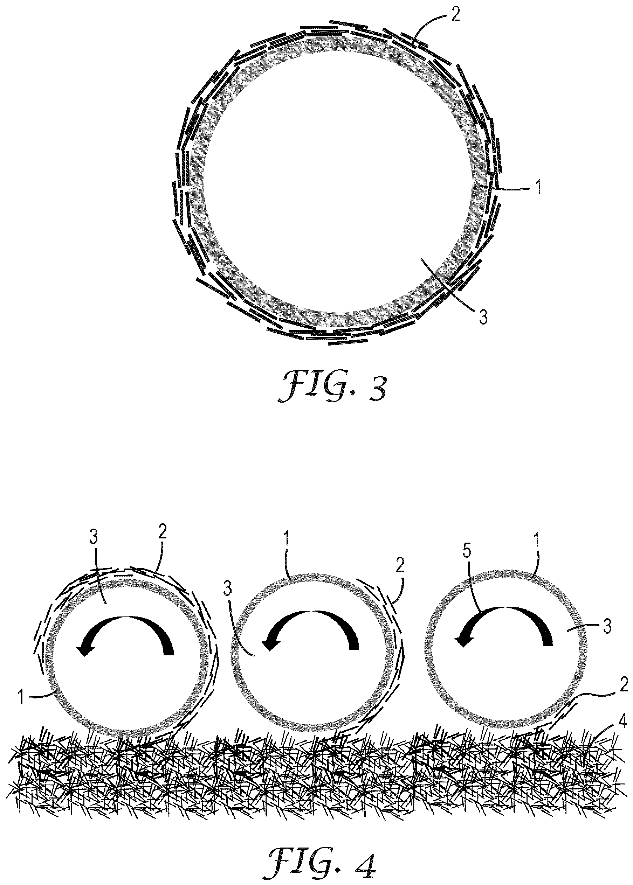

Figure 3 schematically shows a cross-sectional view of a coated glass microsphere comprised in a composition as disclosed herein. The glass microsphere that has been used for coating with hexagonal boron nitride particles is a hollow glass microsphere. In Figure 3, the shell 1 and the hollow space 3 inside the shell 1 of the hollow glass microsphere are shown. The hollow space 3 is filled with air. On the complete surface of the shell 1 of the hollow glass microsphere, platelet-shaped hexagonal boron nitride particles 2 are distributed homogeneously and are adhering to the surface of the microsphere.

Figure 4 schematically shows the thermomechanical treatment for making of a composition comprising coated glass microspheres as disclosed herein. Hollow glass microspheres 1 are mixed with hexagonal boron nitride particles 4 and by mixing they are brought into close contact with one another. By heating up of the mixture to an elevated temperature of 600 - 850 °C, the hollow glass microspheres begin to soften. By mechanically treating the mixture, the hollow glass microspheres are rolled against the hexagonal boron nitride particles. The mechanical treatment by rolling is schematically indicated in Figure 4 by the round arrows 5. By rolling the hexagonal boron nitride particles 4 against the hollow glass microspheres 1 at elevated temperatures, the hexagonal boron nitride particles 2 are adhered on the complete surface of the hollow glass microspheres 1. In Figure 4, the hexagonal boron nitride particles that are already adhering on the surface of the hollow glass microspheres are shown with element number 2, whereas the hexagonal boron nitride particles that are not yet coated onto the surface of the hollow glass microspheres are shown with element number 4. Instead of hollow glass microspheres as shown in Figure 6, also solid glass microspheres may be used for the thermomechanical treatment for making of a composition comprising coated glass microspheres as disclosed herein.

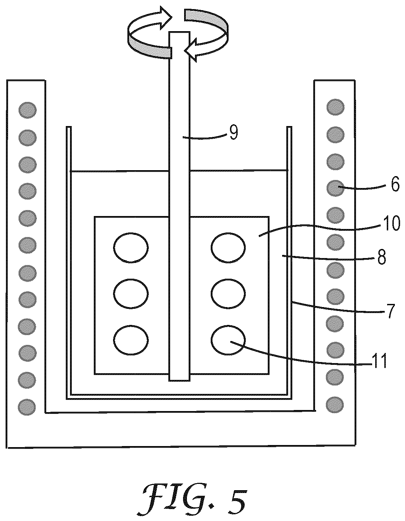

Figure 5 schematically shows a cross-sectional view of an equipment for thermomechanical treatment for making a composition comprising coated glass microspheres as disclosed herein. In a furnace being heated up by heating elements 6, a crucible 7 is placed and filled with a mixture 8 of glass microspheres and hexagonal boron nitride particles. The mixture 8 is stirred with a stirrer 9 having a stirrer blade 10. The stirrer blade 10 may be provided with holes 11. The stirrer 9 and the stirrer blade 10 may be made from stainless steel.

The composition comprising coated glass microspheres disclosed herein may be used as filler for polymers, i.e., for a composite material comprising coated glass microspheres dispersed in a matrix material. The composite material may be used for heat dissipation in electronic devices, such as mobile devices, for LED technology, for electric vehicles, and for 5G technology.

Examples

Materials

BN-1 is a hexagonal boron nitride powder grade of primary particles (hexagonal boron nitride particles) with a mean particle size ($d_{50}$) of 1.7 $\mu$m, a most commonly found value of the particle size distribution ($H_{max}$ (or mode)) of 1.9 $\mu$m, a specific surface area (BET) of 31 $m^2/g$ and a real (or true) density of 2.107 $g/cm^3$ (from 3M Technical Ceramics, Zweigniederlassung der 3M Deutschland GmbH, Kempten, Germany). The $d_{50}$ and $H_{max}$ values were measured by laser diffraction (Mastersizer, wet measurement). An average largest diameter of the hexagonal boron nitride particles of 0.51 $\mu$m was measured for BN-1 by scanning electron microscopy (SEM) at a magnification of 10000x, as an average value of 80 particles measured. The SEM measurement shows that the measurement by laser diffraction includes also clusters of hexagonal boron nitride particles as formed during the wet measurement.

BN-2 is a hexagonal boron nitride powder grade of primary particles (hexagonal boron nitride particles) with a mean particle size ($d_{50}$) of 2.1 $\mu$m, a most commonly found value of the particle size distribution ($H_{max}$ (or mode)) of 2.3 $\mu$m, a specific surface area of 17.6 $m^2/g$ (BET) and a real (or true) density of 2.103 $g/cm^3$ (Cooling Filler Platelets CFP 003UF, available from 3M Technical Ceramics, Zweigniederlassung der 3M Deutschland GmbH, Kempten, Germany). The $d_{50}$ and $H_{max}$ values were measured by laser diffraction (Mastersizer, wet measurement).

iM16K are hollow glass microspheres (available from 3M Company, St.Paul, MN, USA, under the trade designation "3M iM16K Hi-Strength Glass Bubbles") with a mean particle size ($d_{50}$) of 18 $\mu$m, a most commonly found value of the particle size distribution ($H_{max}$ (or mode)) of 18.1 $\mu$m, a specific surface area (BET) of 1.47 $m^2/g$ and a real (or true) density of 0.457 $g/cm^3$. These hollow glass microspheres have a collapse strength (90% survival) of 110 MPa (16000 psi).

GP-A are glass pearls (solid glass microspheres, Spheriglass ® Solid Glass Microspheres A-GLASS 3000, available from Potters Industries LLC, Valley Forge, USA) with a mean particle size ($d_{50}$) of 25 $\mu$m, a most commonly found value of the particle size distribution ($H_{max}$ (or mode)) of 29.8 $\mu$m, and a real (or true) density of 2.472 $g/cm^3$.

GP-E are glass pearls (solid glass microspheres, Spheriglass ® Solid Glass Microspheres E-GLASS 3000E, available from Potters Industries LLC, Valley Forge, USA) with a mean particle size ($d_{50}$) of 29.5 $\mu$m, a most commonly found value of the particle size distribution ($H_{max}$ (or mode)) of 33.7 $\mu$m, and a real (or true) density of 2.633 $g/cm^3$.

Test methods

*Specific surface area* is measured according the BET method (SA 3100 AD, Beckmann Coulter, USA).

*Real density* (or average true density) is measured by He-pycnometer (Ultrapycnometer 1000, Quantachrome, USA).

*Particle size distribution* is measured by laser diffraction (Mastersizer 2000, Malvern, UK). $D_{50}$ is the median value of particle size distribution or the average particle size, with half of the values above and half below this diameter. $H_{max}$ (or mode) is the most commonly found value of the particle size distribution.

*Coating thickness*

Samples of BNcGB (boron nitride coated glass bubbles, glass microspheres as disclosed herein made from hollow glass microspheres) or BNcGP (boron nitride coated glass pearls, glass microspheres as disclosed herein made from solid glass microspheres) are crushed, being pressed at 10 kN between two polished silicon carbide (SSiC, sintered silicon carbide) plates, generating shards (or fractured pieces). The shards are prepared for analysis by scanning electron microscope (SEM). Per sample 5 pictures of shards are taken, showing edges with glass (hollow glass microspheres or solid glass microspheres) and hexagonal boron nitride particles. The thickness of the boron nitride coating on shards of BNcGB or BNcGP can be measured at the edges of shards (by scaling the magnification). At three positions of the edges (for each of the five shard pictures) the layer thickness is measured with three single measurements for each position and the mean value of the coating thickness from these measurements of the 5 pictures of shards is calculated (i.e., the mean value of 3*3*5 = 45 single measurements).

*Isostatic Collapse Strength*

The stability of BNcGB is measured according to the stability test of glass bubbles, by determination of the isostatic collapse strength of hollow glass spheres (ASTM D 3102-78; with the exception that the sample size (in grams) is equal to 10 times the density of the glass bubbles) on a dispersion of the BNcGB in glycerol, when at least 90% of BNcGB pass the pressure applied, without collapsing. Isostatic collapse strength can typically be measured with an accuracy of $\pm$ about five percent on repeated measurements of the same sample.

*Viscosity*

A mixture (liquid, viscous) of polymer and BNcGB or of polymer and BNcGP is filled into a vessel and cooled down to 20 °C in a water bath. After cooling down, the viscosity is measured with a viscosimeter (Brookfield RVDV-II+PX) with spindle RV7 at 10 rpm.

*Thermal conductivity*

After an eventual viscosity measurement, the mixture of polymer and BNcGB or of polymer and BNcGP is degassed (vacuum), then cured for 12 h at 20 °C, and then heated up to 80 °C and cured for 1 h. After curing, a solid disc-shaped sample of a composite material with a diameter of 70 mm and a height of 20 mm is obtained. Two samples for thermal conductivity measurement are cut out of the disc-shaped sample with the dimensions $10 \times 10 \times 2$ mm, one sample in a direction parallel and one in a direction perpendicular to the central axis of the disc-shaped sample. The thermal conductivity values shown in the tables are the mean values of the two samples, representing the bulk thermal conductivity.

For measuring the thermal conductivity, the laser-flash method is used and carried out with the Nanoflash LFA 447 (Netzsch, Selb, Germany) according DIN EN ISO 22007-4. The measurements are taken at 22°C.

The thermal conductivity (TC) is determined by measuring the values for thermal diffusivity a, specific thermal capacity cp and density D, and is calculated from these values according the equation

$$TC = a * c_p * D$$

a and $c_p$ are measured with the Nanoflash LFA 447 (Netzsch, Selb, Germany) on the samples produced with dimensions $10 \times 10 \times 2$ mm. Density is calculated by weighing and measuring the geometric dimension of the samples. The standard Pyroceram 9606 is used for the measurement.

For Examples 50 and 51 and Comparative Examples 8 to 10, thermal conductivity measurements were carried out as described below for these examples. For all other examples, thermal conductivity measurements were carried out as described above.

Preparation of BNcGB and BNcGP samples

*Preparation of mixture for BNcGB (boron nitride coated glass bubbles, composition comprising coated glass microspheres as disclosed herein made from hollow glass microspheres)*

Hexagonal boron nitride particles (BN-1 or BN-2) and hollow glass microspheres (iM16K) are weighed into a 400 ml PP vessel and are mixed via Speedmixer (DAC 600.1, from Hauschild, Hamm, Germany) for 30 sec at 800 rpm and 60 sec at 1600 rpm. The total amount of hexagonal boron nitride particles and hollow glass microspheres is from 70 to 90 g.

*Preparation of mixture for BNcGP (boron nitride coated glass pearls, composition comprising coated glass microspheres as disclosed herein made from solid glass microspheres)*

Hexagonal boron nitride particles (BN-2) and glass pearls (GP-A or GP-E) are weighed into a 400 ml PP vessel and are mixed via Speedmixer (DAC 600.1, from Hauschild, Hamm, Germany) for 30 sec at 800 rpm and 60 sec at 1600 rpm. The total amount of hexagonal boron nitride particles and glass pearls is 100 g.

*Thermomechanical treatment of BNcGB (boron nitride coated glass bubbles, composition comprising coated glass microspheres as disclosed herein made from hollow glass microspheres) and BNcGP (boron nitride coated glass pearls, composition comprising coated glass microspheres as disclosed herein made from solid glass microspheres)*

The mixture for BNcGB or BNcGP, respectively, which has been prepared as described above, is transferred into an alumina crucible (inner diameter 7.5 cm, height 14 cm, volume 620 cm$^3$) and placed in a furnace (Linn High Therm, Eschenfelden, Germany) fitted with a paddle stirrer made from stainless steel with a diameter of the stirrer blade 5 (see Figure 4) of 7 cm.

The mixture is heated up to a maximum temperature of 700°C, 750°C or 800°C (heating rate 11 K/min to 13 K/min), held for 60 min at maximum temperature and cooled down naturally. The mixture is continuously stirred (30 rpm) during heating up, holding at maximum temperature and cooling down.

By this preparation, samples of BNcGB (boron nitride coated glass bubbles, i.e., a composition comprising coated glass microspheres as disclosed herein made from hollow glass microspheres) or BNcGP (boron nitride coated glass pearls, i.e., a composition comprising coated glass microspheres as disclosed herein made from solid glass microspheres) are obtained.

Examples 1 to 20 (EX1 to EX20):

Preparation of BNcGB by thermomechanical treatment

For Examples 1 to 20, samples of boron nitride coated glass bubbles (BNcGB, a composition comprising glass microspheres as disclosed herein made from hollow glass microspheres) were prepared as described above, by mixing of hexagonal boron nitride particles with hollow glass microspheres and thermomechanical treatment of the obtained mixture.

For Examples 1 to 8, hexagonal boron nitride particles BN-1 were used, and for Examples 9 to 20, hexagonal boron nitride particles BN-2 were used.

The amount of hexagonal boron nitride particles in the boron nitride coated glass bubbles is shown in Table 1, with the weight percentage based on the total weight of the mixture of hexagonal boron nitride particles and hollow glass microspheres. The temperature of the thermomechanical treatment is also shown in Table 1.

The obtained samples of boron nitride coated glass bubbles (BNcGB) were characterized by measuring the specific surface (BET), the real density, the particle size distribution ($d_{50}$, $H_{max}$), the coating thickness and the collapse strength.

The test results are shown in Table 1.

Table 1

| Example No. | Amount of BN in BNcGB | Temperature of thermomechanical treatment | BET of BNcGB | Real density of BNcGB | $d_{50}$ of BNcGB | $H_{max}$ of BNcGB | Coating thickness of BNcGB | Isostatic Collapse strength (>90%) of BNcGB |
|---|---|---|---|---|---|---|---|---|
| | [wt.%] | [°C] | [m$^2$/g] | [g/cm$^3$] | [μm] | [μm] | [nm] | [MPa] |
| EX1 | 40 | 700 | 10.4 | 0.689 | 16.59 | 18.36 | 519 | n.m. |
| EX2 | 33 | 700 | 8.55 | 0.637 | 16.73 | 19.07 | 551 | n.m. |
| EX3 | 29 | 700 | 7.93 | 0.607 | 17.04 | 18.82 | 553 | n.m. |
| EX4 | 25 | 700 | 7.29 | 0.594 | 17.85 | 19.36 | n.m. | n.m. |
| EX5 | 40 | 750 | 9.55 | 0.689 | 15.88 | 20.61 | 604 | n.m. |
| EX6 | 33 | 750 | 8.81 | 0.677 | 16.65 | 19.31 | 604 | n.m. |
| EX7 | 29 | 750 | 7.32 | 0.592 | 18.00 | 19.15 | 544 | n.m. |
| EX8 | 25 | 750 | 5.47 | 0.594 | 20.49 | 21.48 | 489 | n.m. |
| EX9 | 40 | 700 | 7.18 | 0.683 | 15.83 | 19.31 | 682 | 130.7 |
| EX10 | 33 | 700 | 6.02 | 0.639 | 16.05 | 19.02 | 669 | 126.5 |
| EX11 | 29 | 700 | 5.49 | 0.607 | 17.52 | 19.32 | 612 | 128.9 |

(continued)

| Example No. | Amount of BN in BNcGB [wt.%] | Temperature of thermomechanical treatment [°C] | BET of BNcGB [m²/g] | Real density of BNcGB [g/cm³] | $d_{50}$ of BNcGB [μm] | $H_{max}$ of BNcGB [μm] | Coating thickness of BNcGB [nm] | Isostatic Collapse strength (>90%) of BNcGB [MPa] |
|---|---|---|---|---|---|---|---|---|
| EX12 | 25 | 700 | 7.18 | 0.589 | 17.72 | 20.02 | 755 | 122.5 |
| EX13 | 40 | 750 | 7.14 | 0.689 | 15.97 | 23.06 | 654 | 119.8 |
| EX14 | 33 | 750 | 6.39 | n.m. | 17,74 | 22,36 | 550 | 114.5 |
| EX15 | 29 | 750 | 5.44 | n.m. | 20.47 | 23.35 | 498 | 116.9 |
| EX16 | 25 | 750 | 4.75 | n.m. | 21.77 | 23.81 | 632 | 110.7 |
| EX17 | 40 | 800 | 7.27 | n.m. | 17.69 | 22.75 | 820 | n.m. |
| EX18 | 33 | 800 | 5.99 | n.m. | 20.32 | 23.34 | 722 | n.m. |
| EX19 | 29 | 800 | 5.06 | n.m. | 21.38 | 23.37 | 719 | n.m. |
| EX20 | 25 | 800 | 4.32 | n.m. | 23.68 | 24.25 | 669 | n.m. |
| n.m. = not measured | | | | | | | | |

Examples 21 to 28 (EX21 to EX28):

Preparation of BNcGP by thermomechanical treatment

For Examples 21 to 28, samples of boron nitride coated glass pearls (BNcGP, a composition comprising coated glass microspheres as disclosed herein made from solid glass microspheres) were prepared as described above, by mixing of hexagonal boron nitride particles with solid glass microspheres and thermomechanical treatment of the obtained mixture.

For Examples 21 to 28, hexagonal boron nitride particles BN-2 were used.

For Examples 21 to 24, solid glass microspheres GP-A were used, and for Examples 25 to 28, solid glass microspheres GP-E were used.

The amount of hexagonal boron nitride particles in the boron nitride coated glass pearls is shown in Table 2, with the weight percentage based on the total weight of the mixture of hexagonal boron nitride particles and solid glass microspheres. The temperature of the thermomechanical treatment is also shown in Table 2.

The obtained BNcGP samples were characterized by measuring the real density and the coating thickness.

The test results are shown in Table 2.

Table 2

| Example No. | Amount of BN in BNcGP [wt. %] | Tem-perature of thermomechanical treatment of BNcGP [°C] | Real density of BNcGP [g/cm)³] | Coating thickness of BNcGP [nm] |
|---|---|---|---|---|
| EX21 | 30 | 700 | 2.414 | 848 |
| EX22 | 20 | 700 | 2.437 | 799 |
| EX23 | 20 | 750 | 2.433 | 691 |
| EX24 | 15 | 750 | 2.483 | n.m. |
| EX25 | 30 | 700 | 2.512 | 750 |
| EX26 | 20 | 700 | 2.559 | n.m. |
| EX27 | 20 | 750 | 2.555 | 865 |

(continued)

| Example No. | Amount of BN in BNcGP [wt. %] | Tem-perature of thermomechanical treatment of BNcGP [°C] | Real density of BNcGP [g/cm)³] | Coating thickness of BNcGP [nm] |
|---|---|---|---|---|
| EX28 | 15 | 750 | 2.577 | n.m. |
| n.m. = not measured | | | | |

Examples 29 to 49 (EX 29 to EX49) and Comparative Examples 1 to 7 (CEX1 to CEX7):

BNcGB as filler for polymers (BNcGB-epoxy composite material)

For Examples 29 to 49, samples of epoxy material filled with boron nitride coated hollow glass microspheres, i.e., samples of a composite material comprising epoxy and composition comprising coated hollow glass microspheres as disclosed herein (BNcGB-epoxy composite material), were prepared. The amount of boron nitride coated glass microspheres in the composite material was 20, 30, 40 or 60 vol.%, based on the total volume of the composite material, as shown in Table 3.

For Example 29, 3.20 g of BNcGB as prepared in Example 5 and 43.79 g of epoxy resin (EpoFix resin, Struers, Willich, Germany) are placed into a 185 ml PP vessel and are mixed via Speedmixer (DAC 600.1, Hauschild, Hamm, Germany) for 40 seconds at 800 rpm, for 1 minute at 2000 rpm and again at 800 rpm for 4 minutes. During mixing a vacuum of 750 mbar is applied. To the mixture of resin and filler, 5.26 g of hardener (EpoFix hardener, Struers, Willich, Germany) is added and mixed via Speedmixer for 40 seconds at 800 rpm, for 30 seconds at 2000 rpm and for 1 minute at 800 rpm, while a vacuum of 750 mbar is applied. The obtained material is cooled to 20 °C in a water bath. After cooling down, the viscosity is measured with a viscosimeter (Brookfield RVDV-II+PX with spindle RV7 at 10 rpm.

After the viscosity measurement, the obtained material is degassed in a desiccator for 15 minutes at 40 mbar, then placed in the Speedmixer, degassing the mixing vessel for 30 seconds and stirring for 40 seconds at 800 rpm. The obtained material is cured for 12 hours at 20 °C, heated up to 80 °C and further cured for 1 hour at 80°C.

By curing, a solid disc-shaped sample of a composite material with a diameter of 70 mm and a height of 20 mm is obtained. Thermal conductivity is measured as described above in the test methods section.

For Examples 30 to 49, the preparation as described above was repeated, but with different kinds of coated glass microbubbles and with different amounts of coated glass microbubbles as shown in Table 3.

For Comparative Example 1, a sample of the pure epoxy material was prepared. For Comparative Example 2, a sample of the epoxy material filled with 40 vol.% of glass bubbles iM16K was prepared.

For Comparative Examples 3 and 4, samples of the epoxy material filled with 40 vol.% of a mixture of glass bubbles iM16K and hexagonal boron nitride particles BN-1 were prepared.

For Comparative Examples 5, 6 and 7, samples of the epoxy material filled with 30 vol.% of a mixture of glass bubbles iM16K and hexagonal boron nitride particles BN-1 were prepared.

For Comparative Examples 3 and 6, the mixture of iM16K and BN-1 comprised 33 wt.% of BN-1, based on the total weight of the mixture of iM16K and BN-1. For Comparative Examples 4 and 7, the mixture of iM16K and BN-1 comprised 25 wt.% of BN-1, based on the total weight of the mixture of iM16K and BN-1. For Comparative Example 5, the mixture of iM16K and BN-1 comprised 40 wt.% of BN-1, based on the total weight of the mixture of iM16K and BN-1.

The test results are shown in Table 3.

As can be seen from Table 3, the thermal conductivity of a composite material of epoxy filled with glass bubbles alone is lower than the thermal conductivity of the pure polymer epoxy alone (CEX2 compared to CEX1). If mixtures of glass bubbles and hexagonal boron nitride particles are used as filler, the thermal conductivity of the resulting composite material is higher than the thermal conductivity of the pure polymer (CEX3 and CEX4 compared to CEX1). If a composition comprising coated glass microspheres as disclosed herein is used as filler for the epoxy polymer, the thermal conductivity of the resulting composite material is even higher than the thermal conductivity of a composite material obtained with a mixture of glass bubbles and hexagonal boron nitride used as filler (EX33 compared to CEX3, both having an amount of hexagonal boron nitride particles of 33 wt.%, and EX36 compared to CEX4, both having an amount of hexagonal boron nitride particles of 25 wt.%).

As can be seen in Table 3, the viscosity of compounds comprising a composition comprising coated glass microspheres as disclosed herein is much lower than the viscosity of compounds with a mixture of hollow glass microspheres and hexagonal boron nitride particles (EX48 and EX49 compared to CEX6 and CEX7). For Comparative Example 5, the sample was too viscous so that no viscosity could be measured, whereas the viscosity for a sample with a composition comprising coated glass microspheres as disclosed herein and the same amount of hexagonal boron nitride particles (CEX5 compared to EX47) was measurable.

Table 3

| Example No. | BNcGB used | Amount of iM16K in epoxy [vol.%] | Amount of mixture of BN and iM16K in epoxy [vol.%] | Amount of BNcGB in epoxy [vol.%] | Thermal conductivity at 22 °C [W/mK] | Viscosity (10 rpm) [mPas] |
|---|---|---|---|---|---|---|
| CEX1 | - | - | - | - | 0.242 | - |
| CEX2 | - | 40 | - | - | 0.214 | 1600 |
| CEX3 | - | - | 40 | - | 0.278 | - |
| CEX4 | - | - | 40 | - | 0.267 | - |
| CEX5 | - | - | 30 | - | 0.268 | too viscous |
| CEX6 | - | - | 30 | - | 0.259 | 79200 |
| CEX7 | - | - | 30 | - | 0.249 | 13600 |
| EX29 | EX5 | - | - | 20 | 0.300 | |
| EX30 | EX5 | - | - | 40 | 0.395 | |
| EX31 | EX5 | - | - | 60 | 0.510 | |
| EX32 | EX6 | - | - | 20 | 0.285 | |
| EX33 | EX6 | - | - | 40 | 0.335 | |
| EX34 | EX6 | - | - | 60 | 0.425 | |
| EX35 | EX8 | - | - | 20 | 0.270 | |
| EX36 | EX8 | - | - | 40 | 0.305 | |
| EX37 | EX8 | - | - | 60 | 0.335 | |
| EX38 | EX13 | - | - | 20 | 0.274 | |
| EX39 | EX13 | - | - | 40 | 0.360 | |
| EX40 | EX13 | - | - | 60 | 0.484 | |
| EX41 | EX14 | - | - | 20 | 0.269 | |
| EX42 | EX14 | - | - | 40 | 0.332 | |
| EX43 | EX14 | - | - | 60 | 0.414 | |
| EX44 | EX16 | - | - | 20 | 0.270 | |
| EX45 | EX16 | - | - | 40 | 0.307 | |
| EX46 | EX16 | - | - | 60 | 0.346 | |
| EX47 | EX5 | - | - | 30 | 0.333 | 5200 |
| EX48 | EX6 | - | - | 30 | 0.306 | 7600 |
| EX49 | EX8 | - | - | 30 | 0.286 | 2400 |

Examples 50 and 51 (EX50 and EX51) and Comparative Examples 8 to 10 (CEX8 to CEX10)

For Examples 50 and 51, samples of epoxy material filled with boron nitride coated glass microspheres, i.e., samples of a composite material comprising epoxy and a composition comprising coated glass microspheres as disclosed herein (BNcGB-epoxy composite material), were prepared.

The samples were prepared as described above for Example 29, with the differences that SCOTCHCAST 265 (available from 3M Company, St. Paul, USA) was used as epoxy powder, coated glass microbubbles as prepared in Example 10 and Example 12, respectively, were used and the amount of coated glass microbubbles was 50 vol.%, based on the total volume of the composite material (see Table 4).

For Comparative Example 8, a sample of epoxy material (ScotchCast 265) filled with 50 vol.% of glass bubbles iM16K was prepared.

For Comparative Example 9, a sample of epoxy material (ScotchCast 265) filled with 50 vol.% of a mixture of glass bubbles iM16K and hexagonal boron nitride particles BN-2 was prepared. The mixture of glass bubbles iM16K and BN-2 comprised 25 wt.% of BN-2, based on the total weight of the mixture of glass bubbles iM16K and BN-2.

For Comparative Example 10, a sample of epoxy material (ScotchCast 265) filled with 50 vol.% of a mixture of glass bubbles iM16K and hexagonal boron nitride particles BN-2 was prepared. The mixture of glass bubbles iM16K and BN-2 comprised 33 wt.% of BN-2, based on the total weight of the mixture of glass bubbles iM16K and BN-2.

Thermal conductivity was measured at 20 °C, 40 °C and 60 °C according ASTM C 518 und ISO 8301 (Fox 50 Heat Flow Meter, TA Instruments, New Castle, USA).

For measurement of the dielectric properties (Dk, Df), disks having a diameter of 25 mm and a height of 0.8 mm were prepared from the obtained samples. The dielectric properties were measured at 9.5 GHz with a split post dielectric resonator according test method ASTM D2520 with standard IEC 61189 (SPDR resonator, QWED, Warsaw, Poland). The SPDR measurement system was combined with Keysight VNA (Vector Network Analyzer Model PNA 8364C 10 MHz - 50 GHz).

The test results are shown in Tables 4 and 5.

Table 4

| Exam. No. | BNcGB used | Amount of iM16K in epoxy [vol.%] | Amount of mixture of BN and iM16K in epoxy [vol.%] | Amount of BNcGB in epoxy [vol.%] | Thermal conductivity at 20 °C [W/mK] | Thermal conductivity at 40 °C [W/mK] | Thermal conductivity at 60 °C [W/mK] |
|---|---|---|---|---|---|---|---|
| CEX8 | - | 50 | - | - | 0.164 | 0.168 | 0.173 |
| CEX9 | - | - | 50 | - | 0.228 | 0.235 | 0.242 |
| CEX10 | - | - | 50 | - | 0.264 | 0.272 | 0.278 |
| EX50 | EX12 | - | - | 50 | 0.269 | 0.278 | 0.286 |
| EX51 | EX10 | - | - | 50 | 0.297 | 0.307 | 0.318 |

As can be seen from Table 4, thermal conductivity of the composite material with a composition comprising coated glass bubbles as disclosed herein is higher than the thermal conductivity of the composite material with a mixture of glass bubbles and hexagonal boron nitride particles, for the same amounts of hexagonal boron nitride particles (25 wt.% for CEX9 and EX50, 33 wt.% for CEX10 and EX51).

Table 5

| Example No. | BNcGB used | Amount of mixture of BN and iM16K in epoxy [vol.%] | Amount of BNcGB in epoxy [vol.%] | Thermal conductivity at 20 °C [W/mK] | Permittivity (Dk) at 9.5 GHz | Loss tangent (Df) at 9.5 GHz |
|---|---|---|---|---|---|---|
| CEX10 | - | 50 | | 0.264 | 2.49 | 0.0153 |
| EX51 | EX10 | | 50 | 0.297 | 2.44 | 0.0133 |

As can be seen from Table 5, permittivity and loss tangent of the composite material with a composition comprising coated glass bubbles as disclosed herein are lower than the values of the composite material with a mixture of glass bubbles and hexagonal boron nitride particles, whereas thermal conductivity of the composite material with a composition comprising coated glass bubbles as disclosed herein is higher than the thermal conductivity of the composite material with a mixture of glass bubbles and hexagonal boron nitride particles.

Examples 52 to 54 (EX52 to EX54) and Comparative Examples 11 and 12 (CEX11 and CEX12)

For Examples 52 to 54, BNcGB samples as prepared in Examples 4, 3, and 2, respectively, are compounded at 24 vol.% into POE (polyolefine elastomer, Engage 8842, available from Dow, Inc., USA).

For Comparative Example 12, 24 vol.% of glass bubbles iM16K are compounded into POE. For Comparative Example 11, a pure, unfilled POE sample is cured.

Cylindric samples were cured having a diameter of 60 mm and a thickness of 1 mm.

Dielectric properties (Dk, Df) are measured at 10 GHz (TE 011 mode, 85072A Split Cylinder Cavitiy Resonator, Keysight) according standard IPC TM-650 2.5.5.13. This method describes the nondestructive measurement of the relative permittivity and loss tangent of unclad dielectric substrates at microwave frequencies using a splitcylinder resonator.

The results are shown in Table 6.

Table 6

| Example No. | BNcGB used | Amount of iM16K in epoxy [vol.%] | Amount of BNcGB in epoxy [vol.%] | Permittivity (Dk) at 10 GHz | Loss tangent (Df) at 10 GHz |
|---|---|---|---|---|---|
| CEX11 | - | - | - | 2.2300 | 0.000198 |
| CEX12 | - | 24 | - | 2.0670 | 0.001659 |
| EX52 | EX4 | - | 24 | 2.1487 | 0.001086 |
| EX53 | EX3 | - | 24 | 2.1604 | 0.001114 |
| EX54 | EX2 | - | 24 | 2.1734 | 0.001108 |

Examples 55 to 62 (EX55 to EX62) and Comparative Examples 13 and 14 (CEX13 and CEX14)

BNcGP as filler for polymers (BNcGP-epoxy composite material)

For Examples 55 to 62, samples of epoxy material filled with boron nitride coated solid glass microspheres, i.e., samples of a composite material comprising epoxy and boron nitride coated solid glass microspheres (BNcGP-epoxy composite material), were prepared. The samples were prepared as described above for Example 29, but with coated solid glass microspheres instead of coated hollow glass microspheres. The coated solid glass microspheres used and the amounts of coated solid glass microspheres are shown in Table 7.

For Comparative Example 13, a sample of epoxy material filled with 40 vol.% of glass pearls GP-A was prepared. For Comparative Example 14, a sample of epoxy material filled with 40 vol.% of glass pearls GP-E was prepared.

Thermal conductivity is measured as described above in the test methods section. The results are shown in Table 7.

Table 7

| Example No. | BNcGP used | Amount of glass pearls in epoxy [vol.%] | Amount of BNcGP in epoxy [vol.%] | Thermal conductivity at 22 °C [W/mK] |
|---|---|---|---|---|
| CEX13 | - | 40 | - | 0.415 |
| CEX14 | - | 40 | - | 0.430 |
| EX55 | EX21 | - | 40 | 0.860 |
| EX56 | EX22 | - | 40 | 0.730 |
| EX57 | EX23 | - | 40 | 0.735 |
| EX58 | EX24 | - | 40 | 0.670 |
| EX59 | EX25 | - | 40 | 0.850 |
| EX60 | EX26 | - | 40 | 0.710 |
| EX61 | EX27 | - | 40 | 0.690 |

(continued)

| Example No. | BNcGP used | Amount of glass pearls in epoxy [vol.%] | Amount of BNcGP in epoxy [vol.%] | Thermal conductivity at 22 °C [W/mK] |
|---|---|---|---|---|
| EX62 | EX28 | - | 40 | 0.660 |

As can be seen from Table 7, the thermal conductivity of a composite material comprising boron nitride coated solid glass microspheres as disclosed herein is higher than for a composite material comprising solid glass microspheres without a coating of hexagonal boron nitride particles.

**Claims**

1.　A composition comprising coated glass microspheres, wherein each coated glass microsphere comprises a glass microsphere and a coating comprising hexagonal boron nitride particles on a least a portion of a surface of the glass microsphere.

2.　The composition of claim 1, wherein the coated glass microspheres comprise coated hollow glass microspheres.

3.　The composition of claim 1 or 2, wherein the coated glass microspheres comprise coated solid glass microspheres.

4.　The composition of any of claims 1 to 3, wherein the coated glass microspheres have an isostatic collapse strength of at least 20 MPa.

5.　The composition of any of claims 1 to 4, wherein the coated glass microspheres have a mean particle size ($d_{50}$) of from 5 to 100 $\mu$m.

6.　The composition of any of claims 1 to 5, wherein the coated glass microspheres comprise at most 50 percent by weight of hexagonal boron nitride particles, based on the total weight of the coated glass microspheres.

7.　The composition of any of claims 1 to 6, wherein the hexagonal boron nitride particles comprise platelet-shaped hexagonal boron nitride particles.

8.　The composition of any of claims 1 to 7, wherein the hexagonal boron nitride particles of the coating comprise hexagonal boron nitride particles that are directly adhering to the surface of the glass microsphere comprised in each coated glass microsphere.

9.　The composition of any of claims 1 to 8, wherein the thickness of the coating is at most 1000 nm.

10.　The composition of any of claims 1 to 9, wherein the coating comprises boron oxide or borates.

11.　The composition of any of claims 1 to 10, wherein the coating does not comprise a binder.

12.　The composition according to any of claims 1 to 11, further comprising a matrix material, wherein the coated glass microspheres are dispersed in the matrix material.

13.　The composition of claim 12, wherein the composition comprises up to 80 percent by volume of the coated glass microspheres, based on the total volume of the composition.

14.　Process for making a composition according to any of claims 1 to 11, comprising

providing glass microspheres;
providing hexagonal boron nitride particles;
mixing the glass microspheres and the hexagonal boron nitride particles to form a mixture of glass microspheres and hexagonal boron nitride particles; and
heat treating of the mixture of glass microspheres and hexagonal boron nitride particles to form the composition comprising coated glass microspheres.

**15.** The process of claim 14, wherein heat treating of the mixture of glass microspheres and hexagonal boron nitride particles comprises thermo-mechanically processing of the mixture of glass microspheres and hexagonal boron nitride particles.

**16.** The process of claim 14 or 15, wherein the mixture of glass microspheres and hexagonal boron nitride particles comprises up to 50 percent by weight of hexagonal boron nitride particles, based on the total weight of the mixture of glass microspheres and hexagonal boron nitride particles.

**17.** The process of any of claims 14 to 16, wherein heat treating of the mixture of glass microspheres and hexagonal boron nitride particles is carried out at a temperature of from 600 to 850 °C.

**18.** The process of any of claims 14 to 17, wherein heat treating of the mixture of glass microspheres and hexagonal boron nitride particles is carried out for at least 30 minutes.

**FIG. 1**

**FIG. 2**

FIG. 3

FIG. 4

FIG. 5

Europäisches
Patentamt

European
Patent Office

Office européen
des brevets

# EUROPEAN SEARCH REPORT

Application Number

EP 21 21 4991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAN CHEN ET AL: "Investigation of the dielectric and thermal conductive properties of core-shell structured HGM@hBN/PTFE composites", MATERIALS SCIENCE AND ENGINEERING: B, ELSEVIER, AMSTERDAM, NL, vol. 238, 20 December 2018 (2018-12-20), pages 61-70, XP085579045, ISSN: 0921-5107, DOI: 10.1016/J.MSEB.2018.12.015 | 1-13 | INV.<br>C03C17/22<br>C03C11/00<br>C03C12/00<br>C08K7/20<br>C08K7/28<br>C08K3/38 |
| A | * the whole document * ----- | 14-18 | |
| A | CZYZEWSKI JAN ET AL: "Modelling of Effective Thermal Conductivity of Composites Filled with Core-Shell Fillers", MATERIALS, vol. 13, no. 23, 1 December 2020 (2020-12-01), page 5480, XP055923986, CH ISSN: 1996-1944, DOI: 10.3390/ma13235480 * the whole document * ----- | 1-18 | |

TECHNICAL FIELDS
SEARCHED (IPC)

C03C
C08K

The present search report has been drawn up for all claims

| Place of search | Date of completion of the search | Examiner |
|---|---|---|
| Munich | 23 May 2022 | Stratford, Katja |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................................
& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3130636 A1
- US 2978340 A, Veatch
- US 3030215 A, Veatch
- US 3129086 A, Veatch
- US 3230064 A, Veatch
- US 3365315 A, Beck
- US 4391646 A, Howell
- US 4767726 A, Marshall
- US 20060122049, Marshall

### Non-patent literature cited in the description

- **YUNG et al.** *Journal of Applied Polymer Science,* 2010, vol. 116, 518-527